# EUROPEAN PATENT APPLICATION

(11) **EP 1 046 864 A2**
(43) Date of publication of application: **25.10.2000**
(21) Application number: 00830215.0
(22) Date of filing: 22.03.2000
(51) Int. Cl.: F23N 5/18

(54) **Venturi meter with calibration pin for gas boilers with sealed combustion chamber**

(30) Priority: 23.03.1999 IT AN990013 U
(71) Applicant: L.N. di NATALINI LINO & C. - S.r.l., 62010-Montecassiano (MC) (IT)
(72) Inventor: Natalini, Lino, Macerata (IT)
(74) Representative: Baldi, Claudio

(57) **Abstract**

The present invention relates to a Venturi meter with calibration pin especially designed for application on fans used in gas boilers with sealed combustion chamber.

## Description

The present patent application relates to a Venturi meter with calibration pin especially designed for application on fans used in gas boilers with sealed combustion chamber.

The combustion chamber of this type of boilers is hermetically sealed and works in light depression due to the aspirating action of a fan of centrifugal type designed to aspirate the fumes from the combustion chamber and push them through the flue to be expelled into the atmosphere.

In order to improve and optimise the operation of this type of boilers with high thermal efficiency it is important to measure the pressure of the combustion products along the ducts and maintain it constant within a predefined range. Special attention must be paid to the detection of such pressure in the air inlet of the fan.

To this end, a Venturi meter is usually mounted inside the outlet nozzle of the screw that surrounds the fan wheel. The Venturi meter is connected to a suitably calibrated pressure switch designed to send a signal that stops the boiler if the fume depression in the throttled section of the Venturi meter exceeds the set value.

In spite of the strict tolerance imposed on the construction of the Venturi meter, on the construction of the fan and on the assembly of the Venturi meter onto the fan, when testing the fan before installing it in the boiler, the depression detected by the Venturi meter often differs from one fan to the other.

The difference can be due to different factors, such as the presence of flash originated during the moulding or machining of the fan screw or the Venturi tube, or the incorrect assembly of the fan wheel. Whatever the cause may be, it is obvious that, in absence of uniformity between the Venturi meters of the fans, also the corresponding pressure switches will be activated at different depression values. This means that the boiler will stop either too late or too early, when it was not necessary.

The purpose of the invention is to remedy the inconvenience by realising a new model of Venturi meter provided with calibration means to set the response within a range of values and compensate the small differences due to the non uniform elements that inevitably exist between the fans.

Another purpose of the invention is to provide calibration means capable of easy manipulation, simple and cost-effective realisation, that do not require deep modifications of the structural configuration of traditional Venturi meters.

The model according to the invention consists in a traditional Venturi meter with a transversal channel that ends in the groove of a converging-diverging duct and a threaded hole in parallel position immediately below the channel used to engage the screw that fixes the Venturi meter inside the air inlet of the centrifugal fan.

The model according to the invention is characterised in that the threaded hole is a through hole that ends immediately below the groove and a calibration pin is screwed inside the hole. The pin tip can penetrate inside the diverging section of the converging-diverging duct.

It is obvious that the presence of the pin tip inside the diverging section of the Venturi tube introduces load losses that alter the depression value in the throttled section of the Venturi meter.

For major clarity the description of the Venturi meter according to the invention continues with reference to the enclosed drawings, which are intended for purposes of illustration and not in a limiting sense, whereby:

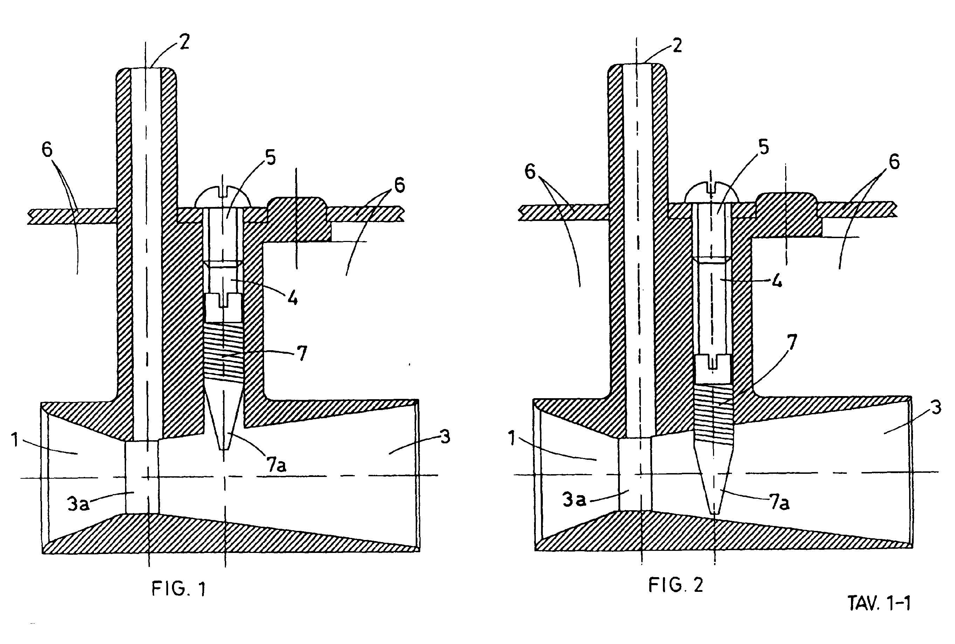

- Fig. 1 is a cross-section of the Venturi meter according to the invention with an axial plane through the transversal channel with the calibration pin almost completely retracted.
- Fig. 2 is the same as Fig. 1, with the calibration pin almost completely ejected. With reference to the aforementioned figures, the model according to the invention comprise a Venturi meter (1) traditionally made up of a transversal channel (2) ending in the groove (3a) of a converging-diverging duct (3) and a threaded hole (4) in parallel position immediately below the channel (3) used to engage the screw (5) that fixes the Venturi meter (1) inside the air inlet (6) of the centrifugal fan.

The model according to the invention is characterised in that the threaded hole (4) is a through hole that ends immediately below the groove (3a) with a calibration pin (7) screwed inside the hole (4), whose tip (7a) can penetrate inside the diverging section of the converging-diverging duct (3).

During testing, the operator only needs to screw the calibration pin (7) until the response of the Venturi meter (1) has the correct value according to the operation conditions of the fan set during testing. Then the operator only needs to hold the pin (7) in place and fix the Venturi meter (1) with the screw (5).

## Claims

1. Venturi meter for gas boilers with sealed combustion chamber provided with a calibration pin, of the type comprising a transversal channel (2) that ends in the groove (3a) of a converging-diverging duct (3) and a threaded hole (4) in parallel position immediately below the channel (3) used to engage the screw (5) that fixes the Venturi meter (1) inside the air inlet (6) of the centrifugal fan, characterised in that the threaded hole (4) is a through hole that ends immediately below the groove (3a) and in that a calibration pin (7) is screwed inside the hole (4), whose tip (7a) can penetrate inside the diverging section of the converging-diverging duct (3).
